# EUROPEAN PATENT SPECIFICATION

(11) **EP 0 475 697 B1**
(45) Date of publication and mention of the grant of the patent: **04.01.1995**
(21) Application number: 91308200.4
(22) Date of filing: 09.09.1991
(51) Int. Cl.: A63F 9/22

(54) **Animation drawing apparatus**
Animationsgerät
Appareil d'animation

(30) Priority: 10.09.1990 JP 239280/90
(43) Date of publication of application: 18.03.1992
(73) Proprietor: SONY CORPORATION, Tokyo 141 (JP)
(72) Inventor: Yasuhara, Hiroshi, c/o Patents Division, Shinagawa-ku, Tokyo 141 (JP); Kusano, Hiroko, c/o Patents Division, Shinagawa-ku, Tokyo 141 (JP); Yasuhara, Nae, c/o Patents Division, Shinagawa-ku, Tokyo 141 (JP); Marusawa, Miyuki, c/o Patents Division, Shinagawa-ku, Tokyo 141 (JP)
(74) Representative: Pilch, Adam John Michael

(56) References cited:
- EP-A- 0 008 324
- EP-A- 0 352 012
- DE-A- 2 807 231
- FR-A- 2 034 340
- GB-A- 2 163 929
- US-A- 4 093 221

## Description

This invention relates to animation drawing apparatus for producing animated pictures on a screen of a display unit such as a television receiver.

A previously-proposed animation drawing system for producing animated pictures on a monitor screen of a television receiver or the like includes an apparatus equipped with a tablet and key groups, wherein a plurality of characters of the same size (for example, 16 x 16 dots) are displayed on a cathode-ray tube (CRT) screen of a monitor, and when a desired one of the characters is selected by depression of a select key or similar by a user, a cursor indicates the selected character. If the desired character is not one of the characters displayed on the monitor screen, some different characters may be selected for display on the monitor screen by the user, and then the desired character can be selected from such newly displayed characters by depression of the select key. Furthermore, the colour of the selected character is also selectable by a colour select key or the like so that the character colour is rendered changeable on the screen.

When the user designates a desired cursor position on the monitor screen by means of a dedicated pen on the tablet corresponding to the monitor screen, the cursor is shifted to the desired position on the monitor screen. If a position set key is depressed at this stage, the character indicated by the cursor can be defined at such desired position.

Pictures produced by repeating the above operation can be scrolled on the screen by depressing a scroll key. It is possible to designate the scroll direction to be upward or downward by the scroll key so that the entire picture thus obtained is scrolled in the same direction.

In the previously-proposed animation drawing system, a group of characters is sequentially displayed on the monitor screen, and a desired character selected out of the displayed character group is indicated by the cursor. After designation of the cursor position by means of the tablet, the cursor-indicated character is defined at the designated position so that a picture is produced on the monitor screen, and subsequently the entire picture can be scrolled upwards or downwards by depressing the scroll key.

Thus, the operation is so performed in the previously-proposed animation drawing apparatus that the entire picture is merely scrolled upwards or downwards which has the disadvantage of providing restricted visual expression, effect and pleasure.

DE-A-2 807 231 discloses an interactive game control system using a digital processor in which a keyboard preselects successive directional movements of one or more simulated player symbols displayed on a screen. The preselected directional movements of the symbols can be effected both prior to the start of the game and during the game in the form of real-time control of the game action.

GB-A-2 163 929 describes an electronic game apparatus with an animation display which can be made up of background image data, character data and game story data. Control of the display may be effected using a range pointer to set a frame having corners defined by the range pointer.

EP-A-0 008 324 discloses computer-generated display of images, such as in a firing control combat simulator, in which priority is assigned to displayed objects so that realistic overlap is achieved in the display when one object is moved into an area occupied by another object.

According to the present invention there is provided animation drawing apparatus for producing animated pictures on a screen of a display unit, the apparatus comprising:
means for providing a plurality of characters on the screen of said display unit;
means for selectively designating a desired character out of those on the screen of said display unit;
means for designating scroll direction data for scrolling the designated character in a predetermined direction; and
means for generating an execution command;
wherein, in response to the execution command from said command generating means, the designated character is scrolled and displayed in accordance with the scroll direction data obtained from said scroll direction designating means;
characterised in that:
said character providing means comprises a plurality of keys with character patterns depicted thereon for causing selected respective character patterns to be displayed on the screen of said display unit whereby a desired character can be composed of said character patterns; and
said character designating means comprises means operable by a user for indicating a character displayed on the screen of said display unit, and means operable by the user for confirming the indicated character to be the selectively designated character.

A preferred embodiment of the present invention described in greater detail below includes means for designating a priority order between the characters on the display screen, wherein, when the characters being displayed are scrolled so as to be mutually superimposed, one of the characters is displayed with priority in accordance with the designated priority order.

The preferred embodiment thus provides an improved animation drawing apparatus equipped with functions for realising expressive motion in animated pictures drawn on a monitor screen of a television receiver, enabling a user to create visual effects and giving visual depth to each picture produced on the screen.

In the preferred embodiment, characters displayed on the monitor screen can be scrolled individually in any predetermined direction by suitable designation. Also, the front and rear positional relationship of characters displayed on the monitor screen can be selectively designated at the time of scroll.

The invention will now be described by way of example with reference to the accompanying drawings, throughout which like parts are referred to by like references, and in which:
Figure 1 is a block diagram of animation drawing apparatus embodying the present invention;
Figure 2 is a perspective view of animation drawing apparatus according to one embodiment of the present invention;
Figure 3 is a plan view of an exemplary control panel in the animation drawing apparatus of Figure 2;
Figure 4 schematically illustrates an exemplary operation of the animation drawing apparatus;
Figure 5 (made up of Figures 5A to 5C) is a flow chart of an operating procedure of the animation drawing apparatus;
Figures 6A to 6I illustrate exemplary operational processes in the animation drawing apparatus;
Figure 7 (made up of Figures 7A and 7B) is a flow chart of the operation for scroll designation in the animation drawing apparatus;
Figure 8 is a flow chart of an operating procedure of the animation drawing apparatus;
Figures 9 and 10 (respectively made up of Figures 9A and 9B, and of Figures 10A and 10B) illustrate how the front and rear positional relationship of pictures is designated at the time of scroll in the animation drawing apparatus; and
Figure 11 (made up of Figures 11A and 11B) is a flow chart of the operation performed to designate the front and rear positional relationship of pictures at the time of scroll to provide the effects shown in Figures 9 and 10.

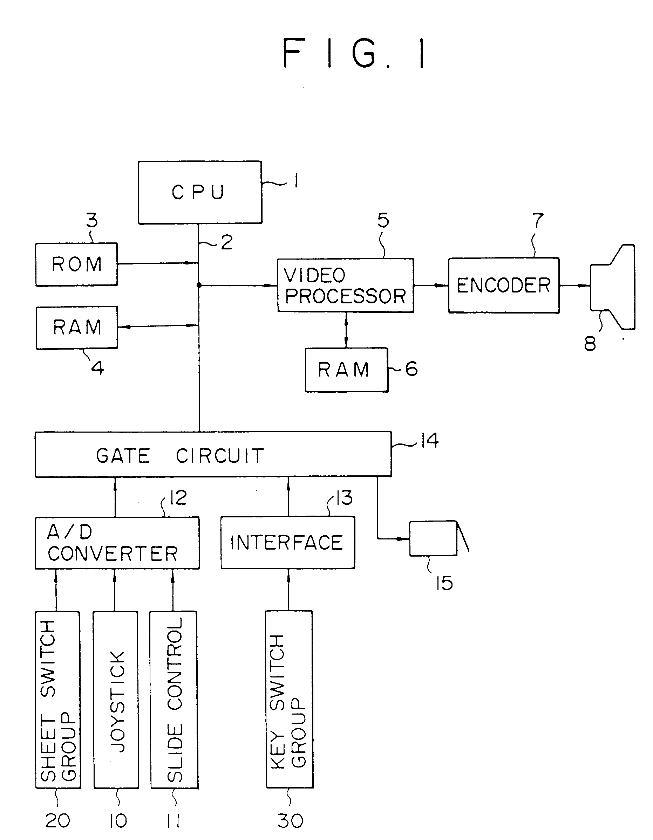

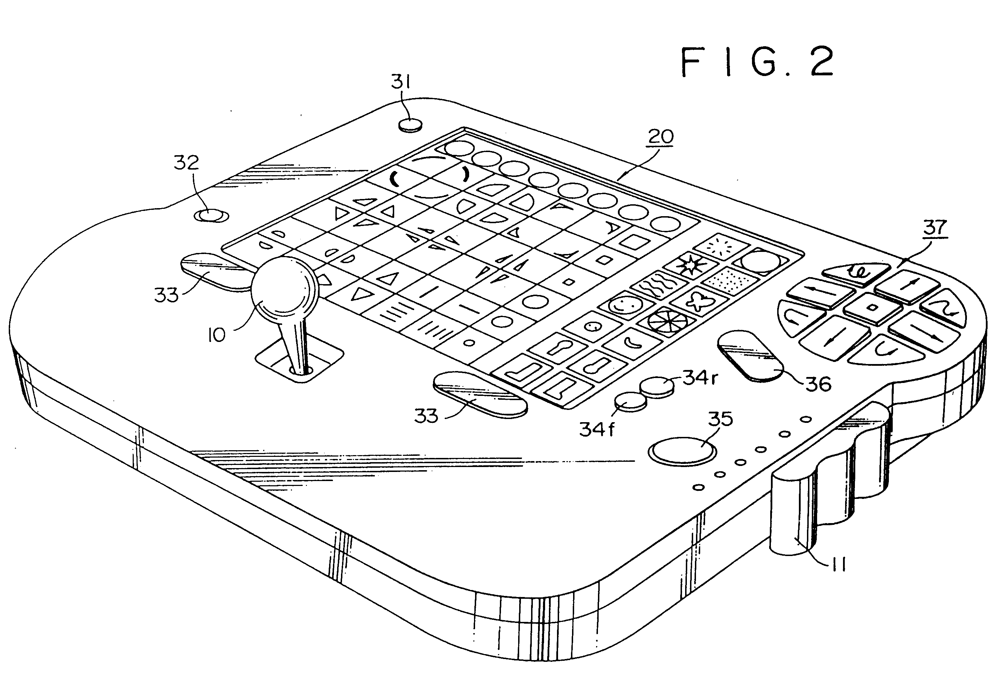

In Figure 1, an animation drawing apparatus embodying the present invention includes a central processing unit (CPU) 1, a bus (comprising address bus, control bus and data bus) 2, a read only memory (ROM) 3 for storing a program and character patterns, a random access memory (RAM) 4 for storing data and the like, and a video processor 5 for sequentially reading out the stored video data from a further RAM 6 via the bus 2. The video data signal thus read is supplied to an encoder 7 (for example an NTSC encoder). The encoder 7 converts the output video data signal from the video processor 5 to a colour video signal such as in the NTSC format, which is then supplied to a monitor 8 so that the video data is displayed on a CRT screen of the monitor 8. A sheet switch group 20, which will be described in greater detail below, comprises keys for designating character patterns to be displayed on the screen of the monitor 8, and keys for designating desired colours of the character patterns. If any key of the sheet switch group 20 is depressed, an analog data signal is generated and is converted into a digital data signal by an analog-to-digital (A/D) converter 12 which is then supplied to the CPU 1 via a gate circuit 14 and the bus 2. A joystick 10 includes potentiometers disposed orthogonally so as to output an analog position data signal. The analog position signal from the joystick 10 is converted into a digital position signal by the A/D converter 12 and is then supplied to the CPU 1 via the gate circuit 14 and the bus 2. Also shown is a slide control 11 which is operable to output an analog background colour signal for changing the background colour of the screen. This signal is converted into a digital background colour signal by the A/D converter 12 and is then supplied to the CPU 1 via the gate circuit 14 and the bus 2. A key switch group 30 is shown in Figure 2 as including a clear key 31, an undo key 32, an execute key 33, front/rear designate keys 34f and 34r, an erase key 35, a go/stop key 36, and a scroll key group 37. A command signal generated by depressing any key of the key switch group 30 is supplied to the CPU 1 via an interface 13, the gate circuit 14 and the bus 2. A buzzer 15 is arranged to emit a sound in response to a signal corresponding to the switch depression data or the command data supplied from the CPU 1 via the gate circuit 14, or in response to a signal corresponding to the position data obtained when the pattern is moved on the monitor screen by manipulating the joystick 10.

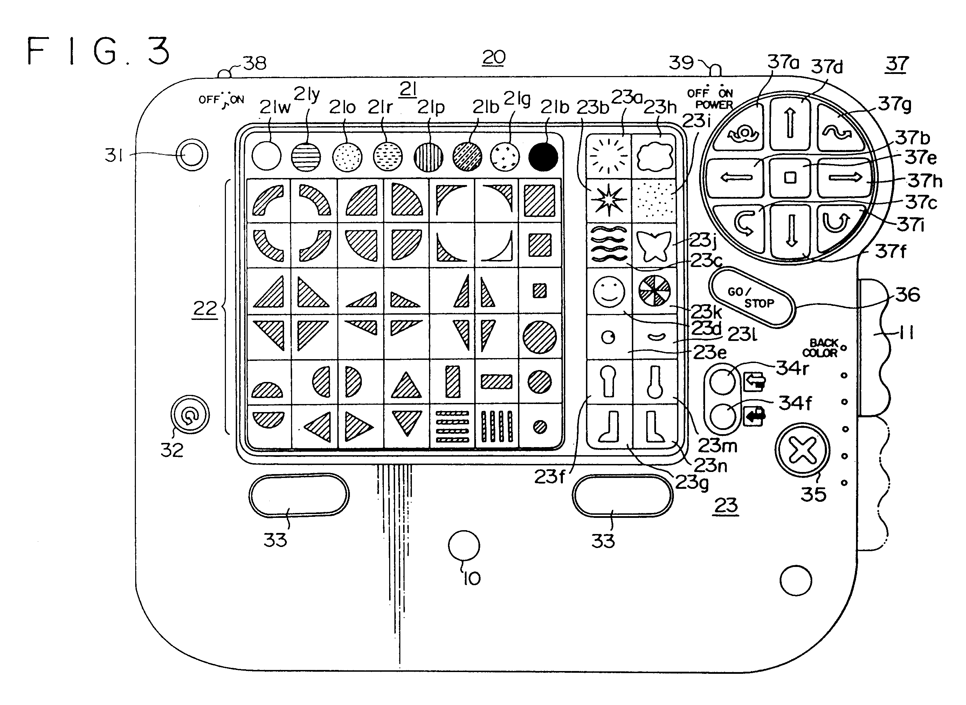

Figure 2 is a perspective view of the animation drawing apparatus according to an embodiment of the present invention. In Figure 2, the sheet switch group 20 comprises abstract pattern keys 22, colour designate keys 21 and concrete pattern keys 23 which are also shown and specifically referenced in Figure 3. Each of the colour designate keys 21 is used for designating the colour of the pattern displayed on the screen by the abstract pattern key 22 or the concrete pattern key 23 (which will be described later). The colour designate keys 21 consist of a white key 21w, a yellow key 21y, an orange key 21o, a red key 21r, a purple key 21p, a blue key 21b, a green key 21g, and a black key 21bl. The portions of such keys 21w, 21y, 21o, 21r, 21p, 12b, 21g and 21bl to be depressed are respectively coloured individually in white, yellow, orange, red, purple, blue, green and black as shown, thereby enabling the user to grasp immediately which of the keys corresponds to which of the colours. As illustrated, the abstract pattern keys 22 consist of 42 different keys which are so arranged that the abstract pattern depicted on any key is displayed on the screen when the key is depressed. The concrete pattern keys 23 consist of 14 different keys 23a, 23b, ..... 23m on which concrete patterns are depicted individually as illustrated. When any of the concrete pattern keys 23 is depressed, the concrete pattern depicted thereon is displayed on the screen. The clear key 31 is used for clearing the pattern displayed on the screen, the undo key 32 for resuming the former state prior to a certain command, and the execute key 33 for defining the position of the pattern selected by the abstract pattern key 22 or the concrete pattern key 23. The front/rear designate keys 34f and 34r are used for designating the front and rear positional relation of patterns, the erase key 35 for erasing the displayed pattern, the go/stop key 36 for moving or stopping the pattern, and the scroll key group 37 for scrolling the pattern. The scroll key group 37 consists of eight different keys 37a, 37b, ..... 37i with scroll states depicted thereon individually as illustrated in Figure 3. Any pattern selected by the abstract pattern key 22 or the concrete pattern key 23 is scrolled on the screen of the monitor 8 with the motion depicted on the respective scroll key 37a, 37b, ..... or 37i.

Further shown in Figure 3 are a buzzer switch 38 for selectively switching on or off the buzzer 15, and a power switch 39.

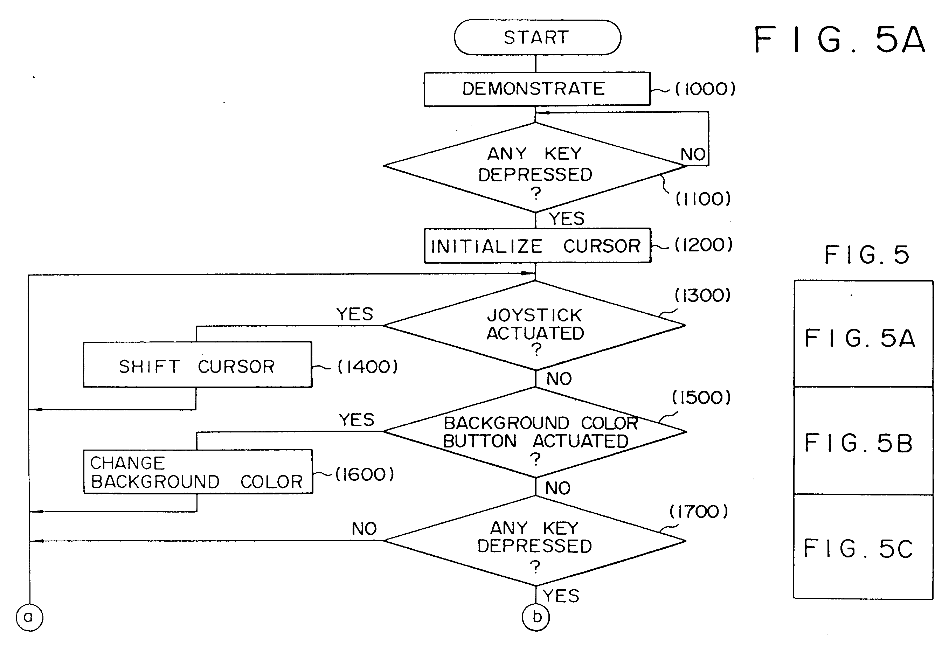

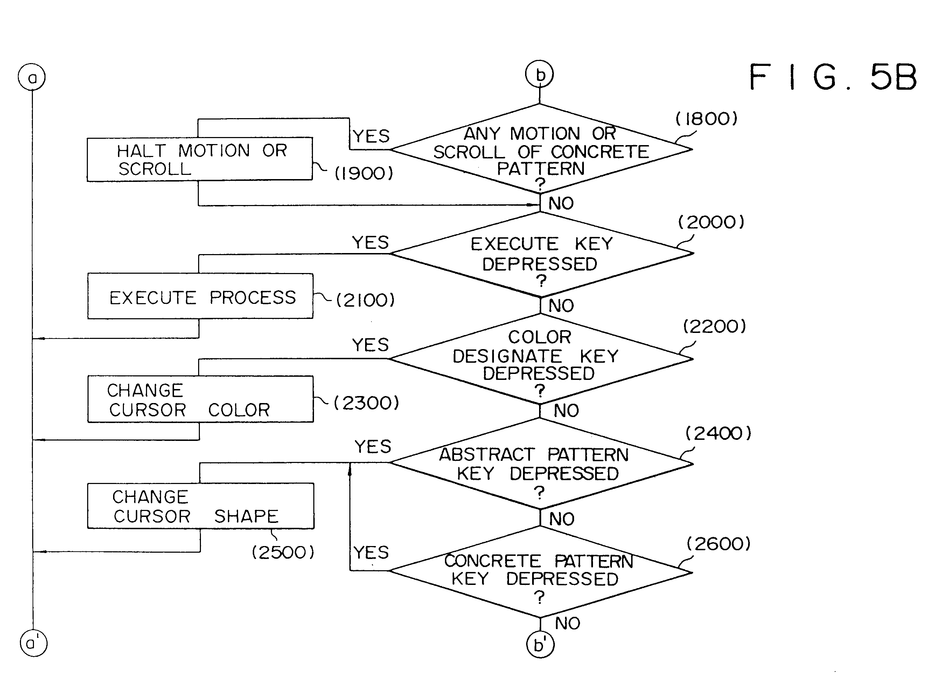

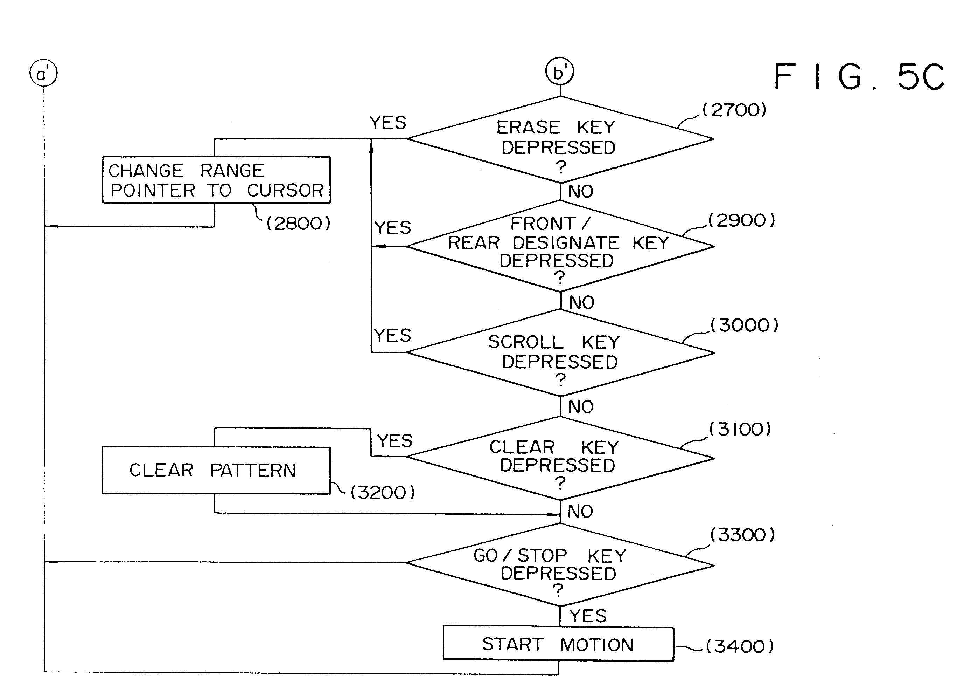

The operation of the animation drawing apparatus embodying the present invention will now be described with reference to the flow chart of Figure 5.

First, when the power switch 39 is turned on ("start"), a demonstration is performed in a step 1000. In the demonstration, pictures composed of abstract and concrete patterns are scrolled or moved on the screen of the monitor 8 in accordance with a demonstration pattern program stored in the ROM 3. Then the operation proceeds to a step 1100.

In the step 1100, a decision is made as to whether any key (Figure 2 or 3) has been depressed or not. The operation proceeds to a step 1200 if the result of such decision is "YES", or to the step 1100 again if the result is "NO".

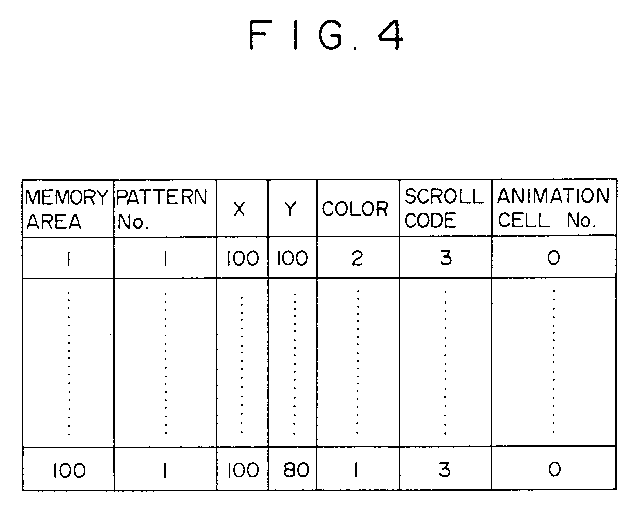

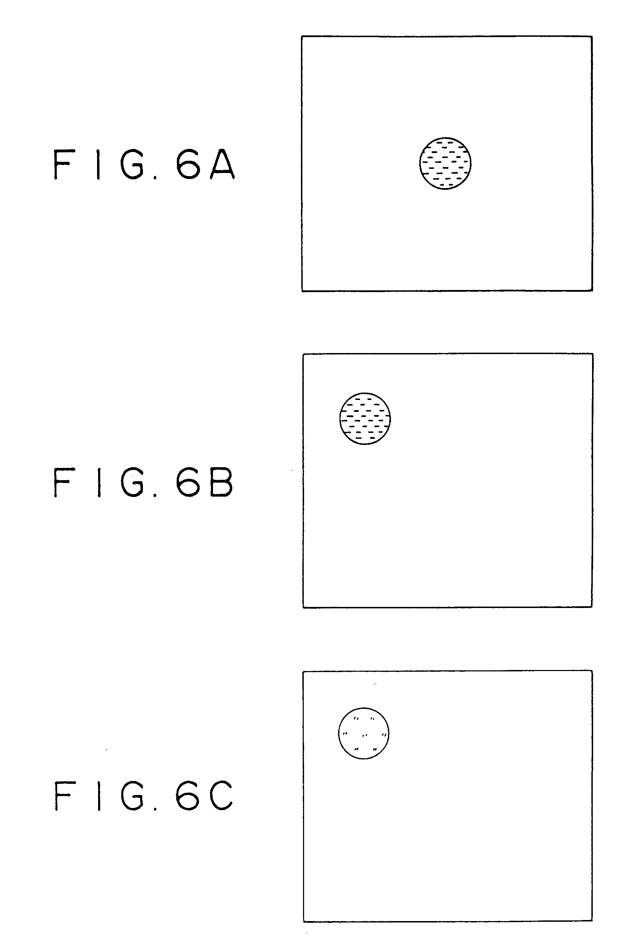

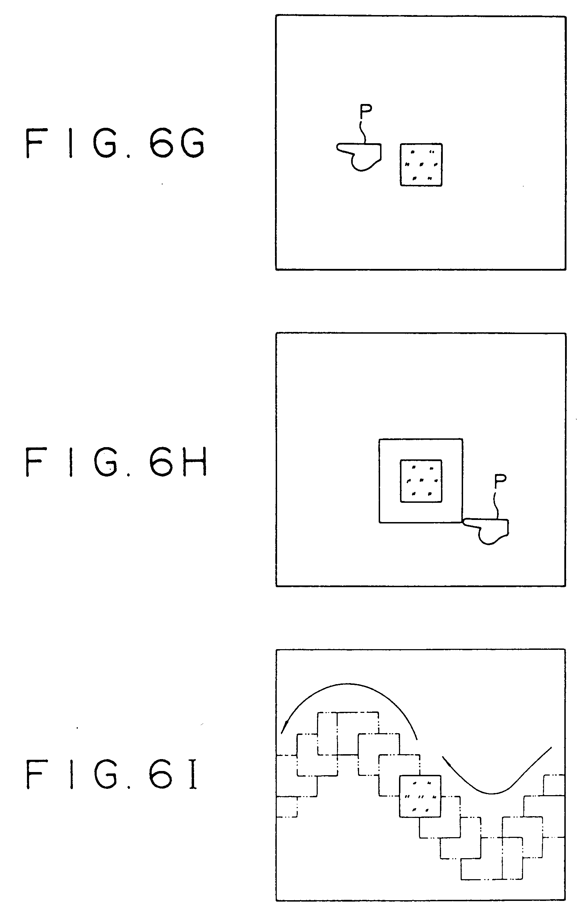

The cursor is initialised in the step 1200. Initialisation of the cursor is performed as shown in Figure 4 to store, in the memory areas of the RAM 4, pattern numbers representing predetermined absolute patterns (such as a circle), positions X and Y (coordinates along the abscissa and ordinate on the monitor screen), and colour data in accordance with the program stored in the ROM 3. The predetermined patterns of predetermined colours are stored, via the bus 2, in accordance with the data in the memory area of the RAM 4, at predetermined positions in the RAM 6 corresponding to the screen of the monitor 8. Then the data is read out from the RAM 6 by the video processor 5, and the video data thus read out is supplied to the monitor 8 via the encoder 7. Therefore, on the screen of the monitor 8, a red circular abstract pattern is displayed with a cursor as shown in Figure 6A. Then the operation proceeds to a step 1300.

In the step 1300, a decision is made as to whether the joystick 10 has been actuated or not. The operation proceeds to a step 1400 if the result of such decision is "YES", or to a step 1500 if the result is "NO".

In the step 1400, the position data X, Y in the memory area of the RAM 4 as shown in Figure 4 is changed in accordance with the digital position signal supplied from the joystick 10 via the A/D converter 12, the gate circuit 14 and the bus 2, and further the pattern stored in the ROM 3 corresponding to the pattern number is stored, with the colour data conforming to the colour number, in the RAM 6 at the position (address) represented by the position data X, Y. As shown in Figure 4, such memory areas are so arranged that the data are sequentially loaded into the CPU 1 downwards from the top in the diagram, namely from the lowest address in the memory area of the RAM 4. It follows therefore that the pattern data are sequentially stored in the RAM 6 in the above order.

The video data is read out from the RAM 6 by the video processor 5 and is then supplied via the encoder 7 to the monitor 8, so that the abstract pattern indicated by the cursor as shown in Figure 6B is displayed at the illustrated position. The operation then returns to the step 1300.

In the step 1500, a decision is made as to whether the background colour button (slide control) 11 has been actuated or not, and the operation proceeds to a step 1600 if the result of such decision is "YES", or to a step 1700 if the result is "NO".

In the step 1600, any portion other than the patterns on the screen of the monitor 8 is changed to the designated background colour. More specifically, the data of the designated colour is stored in the address area of the RAM 6 corresponding to the background. Then the operation returns to the step 1300.

In the step 1700, a decision is made as to whether any key has been depressed or not. The operation proceeds to a step 1800 if the result of such decision is "YES", or to the step 1300 again if the result is "NO". Depression of any key causes any motion of the concrete pattern depicted on the concrete pattern key 23 to cease or any scrolling of both the abstract and concrete patterns on the screen of the monitor 8 to cease.

In the step 1800, a decision is made as to whether there exists any motion of the concrete pattern or any scroll of the concrete and abstract patterns. The operation proceeds to a step 1900 if the result of such decision is "YES", or to a step 2000 if the result is "NO".

In the step 1900, any motion of the concrete pattern or any scroll of the concrete and abstract patterns is brought to a halt. Then the operation proceeds to the step 2000.

In the step 2000, a decision is made as to whether the execute key 33 has been depressed or not. The operation proceeds to a step 2100 if the result of such decision is "YES", or to a step 2200 if the result is "NO".

In the step 2100, a process is executed in such a manner that, when the cursor is in the shape of a pattern, the cursor-indicated pattern is set at the position of the cursor. More specifically, the position X, Y is defined in the RAM 4 as shown in Figure 4, whereby one memory area is defined. Then the operation returns to the step 1300.

In the step 2200, a decision is made as to whether the colour designate key 21 has been depressed or not. The operation proceeds to a step 2300 if the result of such decision is "YES", or to a step 2400 if the result is "NO".

In the step 2300, the colour of the cursor is changed. More specifically, as shown in Figure 4, the colour data stored in the memory area of the RAM 4 is changed to the colour data which represents the colour designated by the colour designate key 21, whereby the pattern in the above-described memory area is stored in the RAM 6 with the colour data stored in the RAM 4. Subsequently the video data stored in the RAM 6 is read out therefrom by the video processor 5 and is then supplied via the encoder 7 to the monitor 8, so that the pattern indicated by the cursor is displayed on the screen of the monitor 8 in the colour designated by the colour designate key 21. When the colour designate key 21g is depressed for example, the abstract pattern is changed to green as shown in Figure 6C. Then the operation returns to the step 1300.

In the step 2400, a decision is made as to whether any abstract key 22 has been depressed or not. The operation proceeds to a step 2500 if the result of such decision is "YES", or to a step 2600 if the result is "NO".

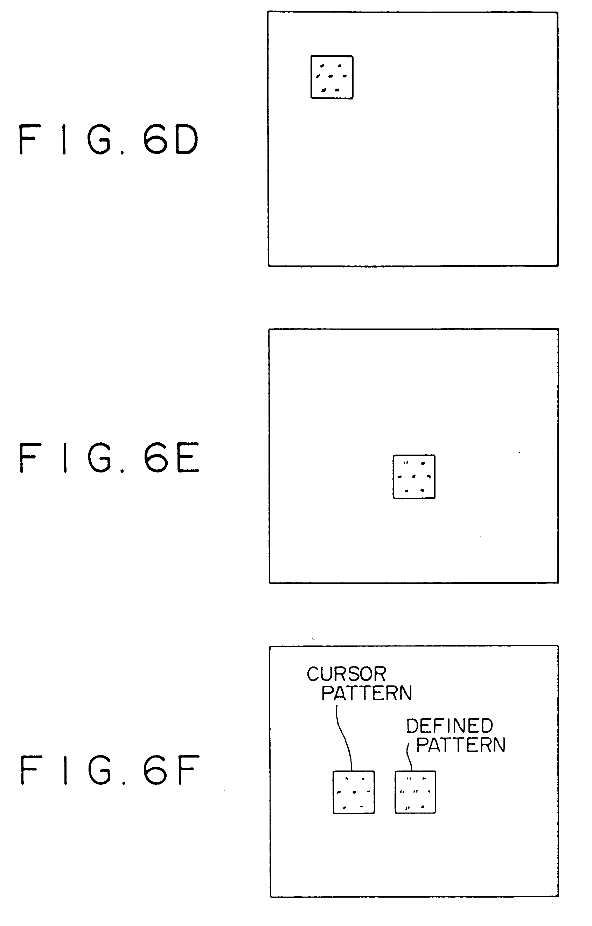

In the step 2500, the shape of the cursor is changed. More specifically, the data representing the pattern number in the memory area of the RAM 4 as shown in Figure 4 is changed to the pattern number data corresponding to the pattern designated by the depressed abstract pattern key 22. Consequently the pattern data corresponding to the pattern number data stored in the RAM 4 is read out from the ROM 3 and is then stored in the RAM 6 in accordance with the data in the above-described memory area. Subsequently the video data stored in the RAM 6 is read out therefrom by the video processor 5 and is then supplied via the encoder 7 to the monitor 8, whereby the cursor-indicated pattern is displayed on the screen of the monitor 8 with the pattern designated by the abstract pattern key 22. For example, when the abstract pattern key 22 having a depiction of a square is depressed, the round cursor is changed to a square one as shown in Figure 6D. Then the operation returns to the step 1300.

In the step 2600, a decision is made as to whether any concrete pattern key 23 has been depressed or not. The operation proceeds to the step 2500 if the result of such decision is "YES", or to a step 2700 if the result is "NO".

In the step 2500, the shape of the cursor is changed. More specifically, the data representing the pattern number in the memory area of the RAM 4 as shown in Figure 4 is changed to the pattern number data corresponding to the pattern designated by the depressed concrete pattern key 23. Consequently the pattern data corresponding to the pattern number data stored in the RAM 4 is read out from the ROM 3 and is then stored in the RAM 6 in accordance with the data in the above-described memory area. Subsequently the video data stored in the RAM 6 is read out therefrom by the video processor 5 and then is supplied via the encoder 7 to the monitor 8, whereby the cursor-indicated pattern is displayed on the screen of the monitor 8 with the pattern designated by the depressed concrete pattern key 23. Then the operation returns to the step 1300. Thereafter, if the abstract pattern is moved by the joystick 10 to the position of Figure 6E for example and the execute key 33 is depressed in the step 2000, the position, colour and shape of the pattern are defined as shown in Figure 6F while the cursor remains unchanged in the same pattern.

In the step 2700, a decision is made as to whether the erase key 35 has been depressed or not. The operation proceeds to a step 2800 if the result of such decision is "YES", or to a step 2900 if the result is "NO". The erase key 35 is used for erasing any pattern on the screen by a hand-shaped range pointer P (which will be discussed later), or for erasing the entire pattern data in the memory area shown in Figure 4.

In the step 2800, the shape of the cursor is changed to the hand-shaped range pointer P shown in Figure 6G. Then the operation returns to the step 1300.

In the step 2900, a decision is made as to whether the front/rear designate key 34f or 34r has been depressed or not. The operation proceeds to the step 2800 if the result of such decision is "YES", or to a step 3000 if the result is "NO".

In the step 3000, a decision is made as to whether the scroll key 37 has been depressed or not. The operation proceeds to the step 2800 if the result of such decision is "YES", for changing the shape of the cursor to the range point P, or to a step 3100 if the result is "NO".

In the step 3100, a decision is made as to whether the clear key 31 has been depressed or not. The operation proceeds to a step 3200 for clearing the pattern if the result of such decision is "YES", or to a step 3300 if the result is "NO".

In the step 3300, a decision is made as to whether the go/stop key 36 has been depressed or not. The operation proceeds to a step 3400 if the result of such decision is "YES", or to the step 1300 again if the result is "NO".

In the step 3400, motion of the concrete pattern or scroll of the abstract and concrete patterns is started. Relative to the scroll for example, the abstract and concrete patterns designated by the range pointer P after determination of the position are scrolled on the screen of the monitor 8 as indicated by arrows which are depicted on the individual scroll keys 37a, 37b, .... 37i constituting the scroll key group 37. For such scroll, the data of the scroll code stored in the memory area of the RAM 4 as shown in Figure 4 can be rewritten by the depressed scroll key 37, so that the position data X, Y are sequentially changed at a predetermined rate, and the video data are written in the RAM 6 sequentially in accordance with the changed data in the memory area of the RAM 4. Such written data are read out sequentially by the video processor 5 and then are supplied via the encoder 7 to the monitor 8, whereby the pattern is scrolled, for example as illustrated in Figure 6I.

Following the step 3400, if the go/stop key 36 or any other key is depressed after start of the scroll or motion of the concrete pattern, such scroll or motion of the concrete pattern is brought to a halt, as explained above with reference to the steps 1700, 1800 and 1900.

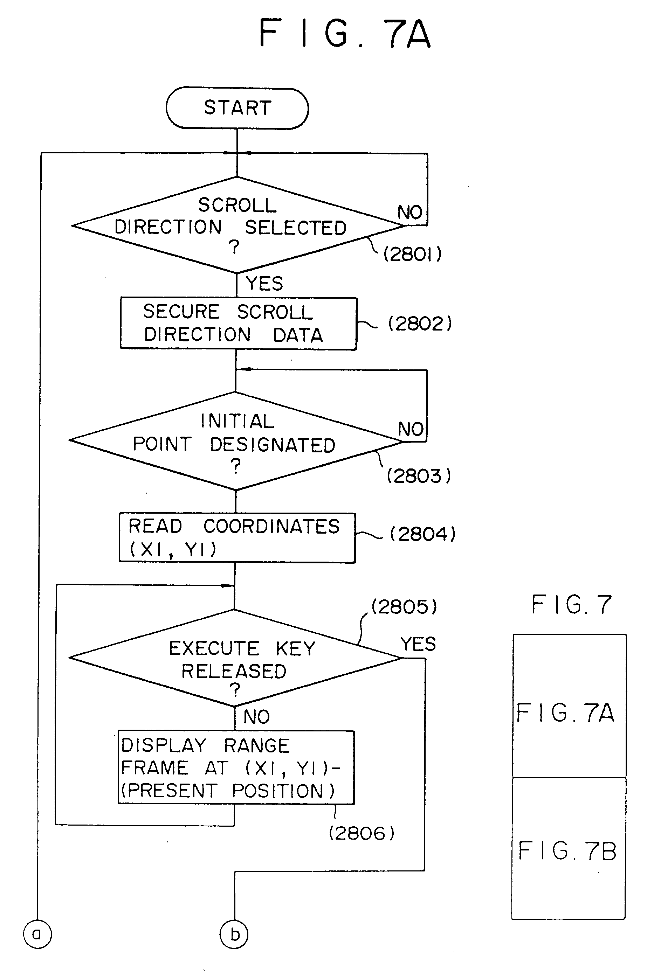

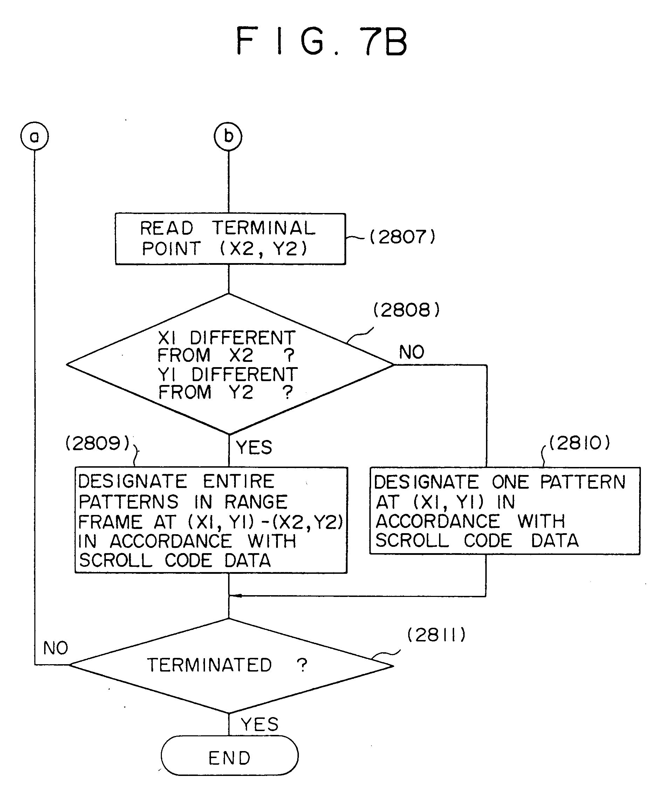

As described above with reference to the flow chart of Figure 5, the operation proceeds to the step 2800 when the scroll key 37 is depressed in the step 3000, and the cursor is changed to the range pointer P so that the pattern or the pattern aggregate to be scrolled on the monitor screen is designated by the range pointer P, and thereafter the scroll is executed. A description will now be given with reference to the flow chart of Figure 7 concerning how to designate the scroll by the range pointer P.

First in a step 2801, a decision is made as to whether the scroll direction has been selected or not. The operation proceeds to a step 2802 if the result of such decision is "YES", or to the step 2801 again if the result is "NO". The scroll direction (including the motion) is denoted by the arrow depicted on the depressible portion of each of the keys 37a, 37b, .... 37i constituting the scroll key group 37.

In the step 2802, the data of the scroll direction is secured. More specifically, the scroll data obtained from the depressed scroll key 37a, 37b, .... 37h or 37i is stored in the RAM 4. Then the operation proceeds to a step 2803.

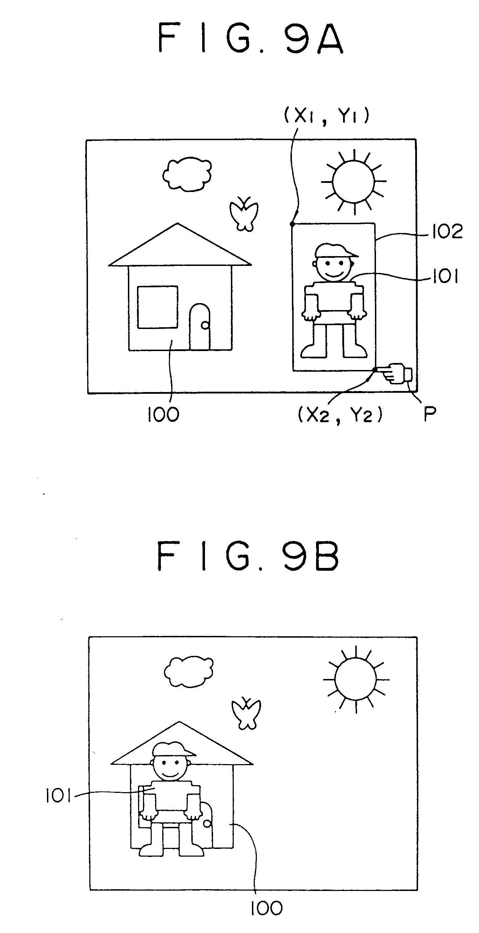

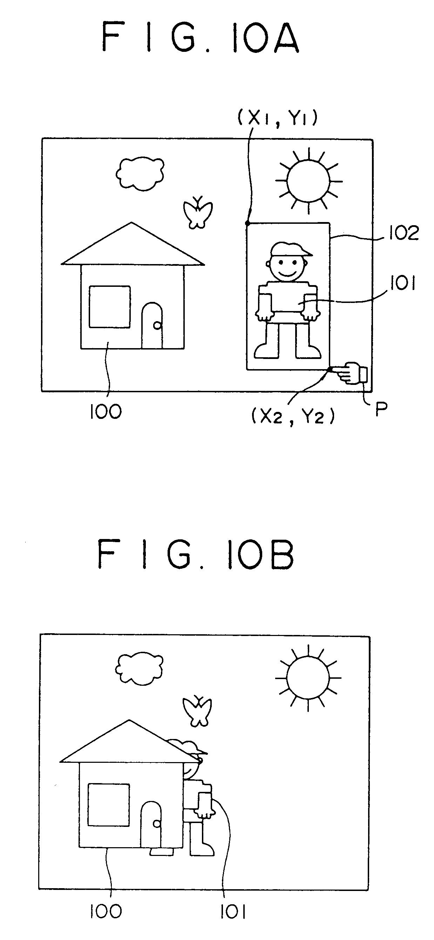

In the step 2803, a decision is made as to whether the initial point has been designated or not. The operation proceeds to a step 2804 if the result of such decision is "YES", or to the step 2803 again if the result is "NO". Designation of the initial point is executed by first shifting the range pointer P, which is used as a cursor as illustrated in Figure 9A or 10A, by means of the joystick 10 to a suitable position in the upper left region of the pattern or the pattern aggregate to be scrolled, and then depressing the execute key 33. The position (X1, Y1) at the instant of depressing the execute key 33 is determined as the initial point.

In the step 2804, the position (X1, Y1) is read. More specifically, the initial point (X1, Y1) is derived from the digital position signal obtained by actuating the joystick 10, and such initial point (X1, Y1) is stored in the RAM 4. Then the operation proceeds to a step 2805.

In the step 2805, a decision is made as to whether the execute key 33 has been released or not. The operation proceeds to a step 2807 if the result of such decision is "YES", or to a step 2806 if the result is "NO".

In the step 2806, a range frame 102 is displayed on the monitor screen as illustrated in Figure 9A or 10A. The range frame 102 is displayed by first shifting the range pointer P to the initial point (X1, Y1) by means of the joystick 10, then depressing the execute key 33 continuously, and shifting the range pointer P by the joystick 10 to a suitable position in the lower right region of the pattern or the pattern aggregate to be scrolled, as illustrated in Figure 9A or 10A. The range frame 102 signifies that the pattern or the pattern aggregate enclosed by such frame 102 is scrolled.

In the step 2807, a terminal point is read. As illustrated in Figure 9A or 10A, the range pointer P is shifted on the monitor screen by the joystick 10 while the execute key 33 is continuously depressed. Subsequently the pattern or the pattern aggregate (a boy 101 in the example of Figure 9A or 10A) to be scrolled is enclosed with the range frame 102, and the execute key 33 is released at the terminal point (X2, Y2). Then the position (X2, Y2) of the range pointer P used as a cursor on the screen at the instant of releasing the execute key 33 is stored in the RAM 4. Thereafter the operation proceeds to a step 2808.

In the step 2808, a decision is made as to whether the value X1 of the initial point is different or not from the value X2 of the terminal point and also whether the value Y1 of the initial point is different or not from the value Y2 of the terminal point. The operation proceeds to a step 2809 if the result of such decision is "YES", or to a step 2810 if the result is "NO".

In the step 2809, the range designated by the initial point (X1, Y1) and the terminal point (X2, Y2), namely the entire pattern (the boy 101 in this example) designated by the frame 102 as illustrated in Figure 9A or 10A, is so processed that the scroll code data stored in the memory area of the RAM 4 corresponding to such pattern is changed to scroll code data obtained by depression of the scroll key 37. Then the operation proceeds to a step 2811.

In the step 2810, the scroll code data stored in the memory area of the RAM 4 corresponding to one designated pattern is changed to the scroll code data obtained by depression of the scroll key 37. Then the operation proceeds to the step 2811.

In the step 2811, a decision is made as to whether the execute key 33 for example has been depressed or not. The operation is terminated if the result of such decision is "YES", or returns to the step 2801 again if the result is "NO".

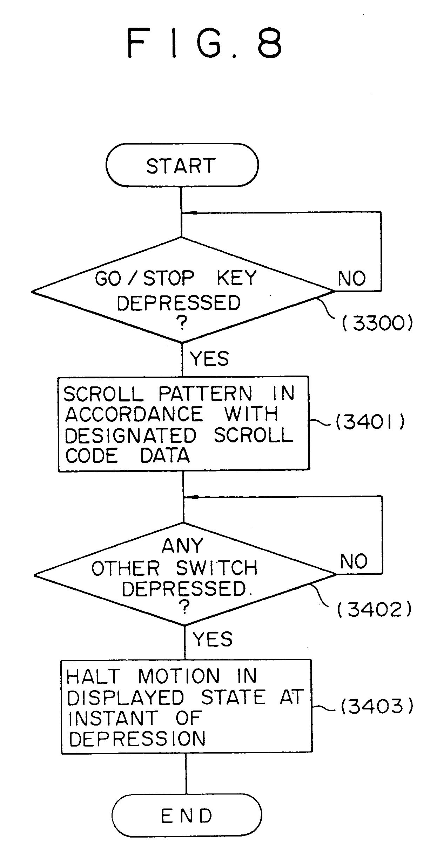

After completion of designating the scroll direction and the pattern or the pattern aggregate to be scrolled as described above, the go/stop key 36 is depressed in the step 3300 in the previous flow chart of Figure 5 for scrolling the designated pattern or pattern aggregate. When the go/stop key 36 is depressed in the step 3300 in this flow chart, the operation proceeds to the step 3400 for starting the scroll. Now the routine for executing such scroll will be described below with reference to the flow chart of Figure 8.

First in the step 3300, a decision is made as to whether the go/stop key 36 has been depressed or not. The operation proceeds to a step 3401 if the result of such decision is "YES", or to the step 3300 again if the result is "NO".

In the step 3401, the desired scroll is executed in accordance with the designated scroll code data. More specifically, the positions X, Y of the individual patterns in the memory areas (for example, from 1 to 100) of Figure 4 are sequentially rewritten in accordance with the scroll code data stored in the memory areas, and then the video data are written sequentially in the RAM 6 in accordance with the individual data in the memory areas where the rewritten positions X, Y are stored. Then the operation proceeds to a step 3402.

In the step 3402, a decision is made as to whether any of the key switches 30 or the sheet switches 20 has been depressed or not. The operation proceeds to a step 3403 if the result of such decision is "YES", or the step 3402 again if the result is "NO".

In the step 3403, writing the video data in the RAM 6 initiated by the step 3401 is interrupted if any of the key switches 30 or the sheet switches 20 is in the depressed state, whereby the video data written last in the RAM 6 is read out therefrom repeatedly by the video processor 5 so that a motionless still video image is displayed on the monitor screen, and thus the operation is terminated.

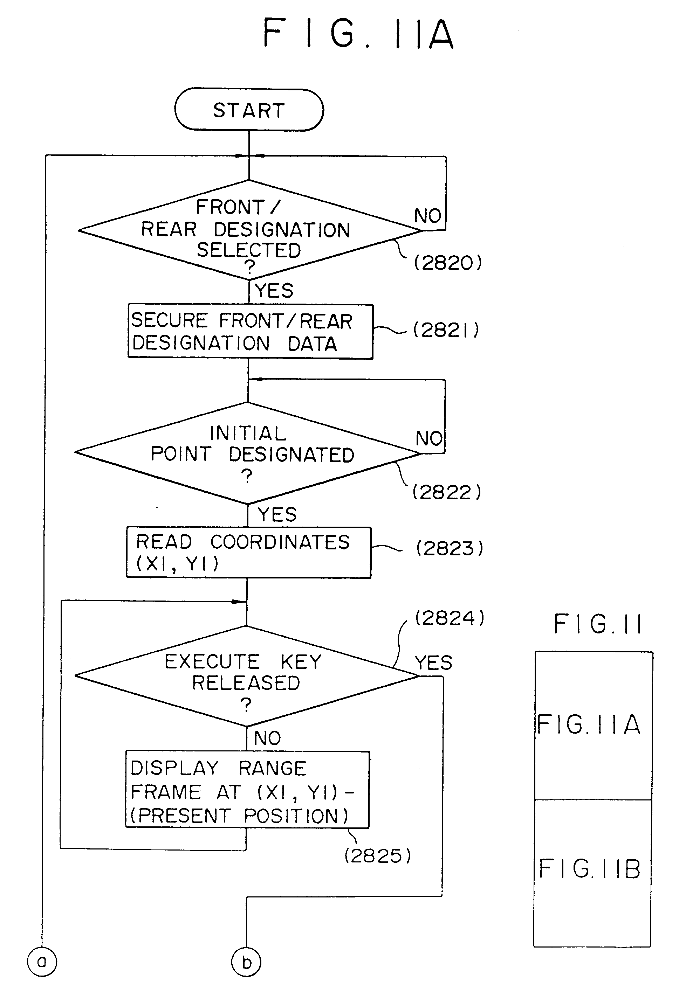

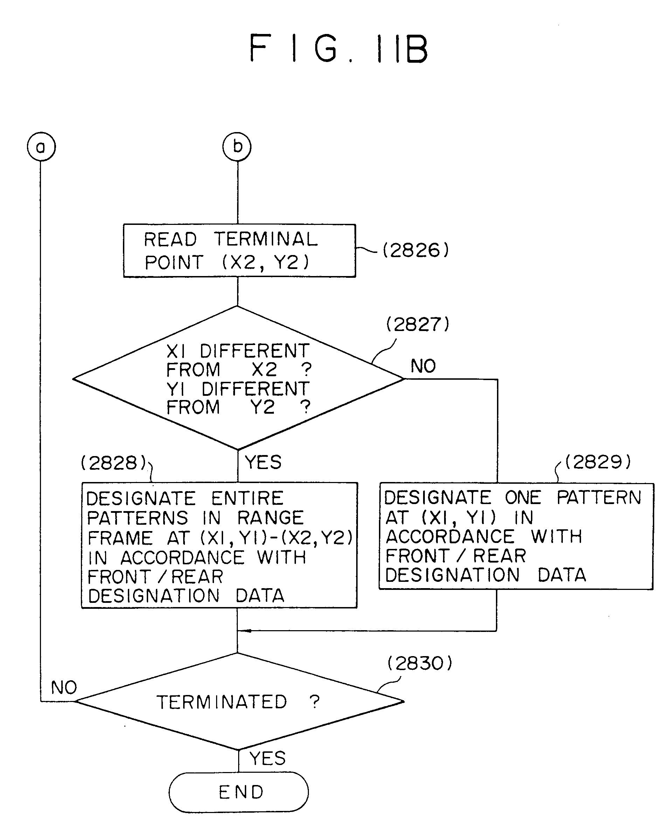

In the scroll mode as mentioned, there may occur an occasion when the pattern or the pattern aggregate scrolled on the screen by the above-described operation is superimposed on another pattern or pattern aggregate. In such a case, it is possible previously to designate the display priority to determine which of the superimposed patterns or pattern aggregates is to be first displayed with priority on the screen. More specifically, when the front/rear designate key 34f or 34r is depressed in the step 2900 shown in the flow chart of Figure 5, the operation proceeds to the step 2800. In this step, the cursor is changed to the range pointer P, then the pattern or the pattern aggregate to be designated with respect to the front/rear positional relation on the screen is designated by the range pointer P, and subsequently the scroll process is executed. Hereinafter, designation of the front/rear positional relation by the aforementioned range pointer P will be described with reference to the flow chart of Figure 11.

First, in a step 2820, a decision is made as to whether the front/rear priority designation has been selected or not. The operation proceeds to a step 2821 if the result of such decision is "YES", or to the step 2820 again if the result is "NO".

In the step 2821, the front/rear designate data is secured. More specifically, the front/rear designate data obtained from the depressed front/rear designate key 34f or 34r is stored in the RAM 4. Then the operation proceeds to a step 2822.

In the step 2822, a decision is made as to whether the initial point has been designated or not. Then the operation proceeds to a step 2823 if the result of such decision is "YES", or to the step 2822 again if the result is "NO". Such designation of the initial point is performed by first shifting the range pointer P, which is used as a cursor as illustrated in Figure 9A or 10A, by means of the joystick 10 to a suitable position in the upper left region of the pattern or the pattern aggregate to be scrolled, and then depressing the execute key 33. The position (X1, Y1) at the instant of depressing the execute key 33 is determined to be the initial point.

In the step 2823, the position (X1, Y1) is read. The initial point (X1, Y1) is derived from the digital position signal obtained by actuating the joystick 10, and is then stored in the RAM 4. Thereafter the operation proceeds to a step 2824.

In the step 2824, a decision is made as to whether the execute key 33 has been released or not. The operation proceeds to a step 2826 if the result of such decision is "YES", or to a step 2825 if the result is "NO".

In the step 2825, the range frame 102 is displayed on the monitor screen as illustrated in Figure 9A or 10A. Such display of the range frame 102 is performed by first shifting the range pointer P to the initial point (X1, Y1) by means of the joystick 10 and, while continuously depressing the execute key 33, further shifting the range pointer P by the joystick 10 to a suitable position in the lower right region of the pattern or the pattern aggregate which is to be designated with respect to the front/rear positional relation, as illustrated in Figure 9A or 10A. The frame 102 signifies that the pattern or the pattern aggregate enclosed by the frame is designated with respect to the front/rear positional relation. Then the operation returns to the step 2824.

In the step 2826, the terminal point is read. The range pointer P is shifted on the monitor screen by the joystick 10 as illustrated in Figure 9A or 10A while the execute key 33 is held continuously in the depressed state thereof, and after the pattern or the pattern aggregate to be designated with respect to the front/rear positional relation (the boy 101 in Figure 9A or 10A) is enclosed by the range frame 102, the execute key 33 is released at the terminal point (X2, Y2). The position data (X2, Y2) of the range pointer P used as a cursor on the screen at the instant of release of the execute key 33 is stored in the RAM 4. Then the operation proceeds to a step 2827.

In the step 2827, a decision is made as to whether the value X1 of the initial point is different or not from the value X2 of the terminal point and also whether the value Y1 of the initial point is different or not from the value Y2 of the terminal point. The operation proceeds to a step 2828 if the result of such decision is "YES", or to a step 2829 if the result is "NO".

In the step 2828, there is written, in the lower or upper memory area shown in Figure 4, the designated range from the initial point (X1, Y1) to the terminal point (X2, Y2), namely the entire data (the boy 101 in this example) in the memory areas of the RAM 4 in Figure 4 (corresponding to the address range in the RAM 4) where the pattern designated by the range frame 102 as illustrated in Figure 9A or 10A is stored. The sequence of writing the pattern data in the memory areas of the RAM 6 is downwardly from the top as shown in Figure 4 (from the smallest-address memory area to the greatest-address memory area of the RAM 4). Consequently, when the designated pattern or pattern aggregate is to be displayed at a visually front position on the screen in comparison with the other pattern or pattern aggregate, the former pattern or pattern aggregate is written in the lower memory area. On the other hand, when the positional relation therebetween is the reverse, the former pattern or pattern aggregate is written in the upper memory area. Thereafter the operation proceeds to a step 2830.

In the step 2829, the pattern data in the memory area of the RAM 4 corresponding to one designated pattern is written in the lower or upper memory area in Figure 4 in a similar manner to the above-described process. Then the operation proceeds to the step 2830.

In the step 2830, a decision is made as to whether the execute key 33 has been depressed or not. The operation is terminated if the result of such decision is "YES", or returns to the step 2820 if the result is "NO".

The scroll is started by depressing the go/stop key 36 subsequently to designation of the front/rear positional relation as previously mentioned. When the boy 101 is designated as illustrated in Figure 9A after depression of the front/rear designate key 34f, the boy 101 is so scrolled as to be displayed in front of the house 100 as illustrated in Figure 9B. However, if the boy 101 is designated as illustrated in Figure 10A after depression of the front/rear designate key 34r, the boy 101 is so scrolled as to be displayed behind the house 100 as illustrated in Figure 10B. Therefore, despite the display being on a two-dimensional plane, it is possible to achieve an effect of displaying the patterns with visual depth, hence providing an enhanced expressive display.

The above embodiment has been described in the context of an exemplary case in which the front/rear positional relation is selectively determined between one designated pattern or pattern aggregate and another non-designated one on the screen. In addition thereto, it is also possible to modify the designation by establishing a priority order among three or more patterns or pattern aggregates to determine the front/rear positional relation for the designated ones. Besides the above example described with regard to the motion and the scroll direction selected by the scroll key 37 shown in Figures 2 and 3, it is further possible to realise a variety of display states where, for example, any pattern or pattern aggregate is held stationary for a predetermined time after being scrolled for a fixed time, or is displayed or erased randomly on the screen. It will be understood that the designation of such front/rear positional relation is attainable also by the combination of an AND circuit, an OR circuit and an inverter for writing in the RAM 6.

According to the technique described hereinabove, the scroll direction can be designated with respect to each of individual characters displayed on the screen of a monitor, which results in advantages including that of giving an expressive motion to any picture drawn on the screen to provide pleasing visual effects.

Further, the front and rear positional relation between the displayed characters can be designated in a scroll mode, whereby the pictures produced on the screen are processed so as to have an apparent visual depth in addition to the expressive motion.

## Claims

1. Animation drawing apparatus for producing animated pictures on a screen of a display unit (8), the apparatus comprising:
means (3) for providing a plurality of characters on the screen of said display unit (8);
means (22,23) for selectively designating a desired character out of those on the screen of said display unit (8);
means (37) for designating scroll direction data for scrolling the designated character in a predetermined direction; and
means (33) for generating an execution command;
wherein, in response to the execution command from said command generating means (33), the designated character is scrolled and displayed in accordance with the scroll direction data obtained from said scroll direction designating means (37);
characterised in that:
said character providing means comprises a plurality of keys (20) with character patterns depicted thereon for causing selected respective character patterns to be displayed on the screen of said display unit (8) whereby a desired character can be composed of said character patterns; and
said character designating means comprises means (10) operable by a user for indicating a character displayed on the screen of said display unit (8), and means (33) operable by the user for confirming the indicated character to be the selectively designated character.

2. Apparatus according to claim 1, comprising means (34f, 34r) for designating a priority order between a plurality of characters on the screen of the display unit (8) wherein, when the characters being displayed are scrolled to be mutually superimposed, one of such characters is displayed with priority according to the designated priority order.

3. Apparatus according to claim 1 or claim 2, wherein said character designating means includes a range pointer (P) displayed on said screen, and the character is indicated by said range pointer (P).

4. Apparatus according to claim 3, wherein, when two predetermined points on the screen are designated by said range pointer (P) displayed on the screen, a frame having corners at said two points is displayed by said designating means.

5. Apparatus according to any one of the preceding claims, wherein said character designating means includes a joystick (10).

## Patentansprüche

1. Animationszeichengerät zur Erzeugung von animierten Bildern auf dem Bildschirm einer Anzeigeeinheit (8) mit
einer Einrichtung (3) zur Bereitstellung einer Mehrzahl von Zeichen auf dem Bildschirm der Anzeigeeinheit (8),
einer Einrichtung (22, 23) zum selektiven Festlegen eines gewünschten Zeichens aus den Zeichen auf dem Bildschirm der Anzeigeeinheit (8),
einer Einrichtung (37) zum Festlegen von Bildlauf-Richtungsdaten für den Bildlauf des festgelegten Zeichens in einer vorbestimmten Richtung,
sowie einer Einrichtung (33) zur Erzeugung eines Ausführungsbefehls,
wobei das festgelegte Zeichen in Abhängigkeit von dem aus der Einrichtung (33) zur Erzeugung des Ausführungsbefehls kommenden Ausführungsbefehl nach Maßgabe der aus der Einrichtung (37) zur Festlegung der Bildlaufrichtung gewonnenen Bildlauf-Richtungsdaten einen Bildlauf ausführt und angezeigt wird,
**dadurch gekennzeichnet**,
daß die Einrichtung für die Bereitstellung von Zeichen eine Mehrzahl von Tasten (20) mit darauf abgebildeten Zeichenmustern umfaßt, die eine Anzeige ausgewählter Zeichenmuster auf dem Bildschirm der Anzeigeeinheit (8) bewirken, wodurch aus diesen Zeichenmustern ein gewünschtes Zeichen zusammensetzbar ist,
und daß die Mittel zum Festlegen von Zeichen eine Einrichtung (10) umfaßt, die von dem Benutzer betätigbar sind, um ein auf dem Bildschirm der Anzeigeeinheit (8) angezeigtes Zeichen zu kennzeichnen, sowie eine Einrichtung (33), die von dem Benutzer betätigbar ist , um zu bestätigen, daß das gekennzeichnete Zeichen das selektiv festgelegte Zeichen ist.

2. Gerät nach Anspruch 1 mit einer Einrichtung (34f, 34r) zum Festlegen eines Prioritätsrangs zwischen einer Mehrzahl von Zeichen auf dem Bildschirm der Anzeigeeinheit (8), wobei dann, wenn die angezeigten Zeichen so verschoben werden, daß sie einander überlagern, eines dieser Zeichen nach dem festgelegten Prioritätsrang mit Priorität angezeigt wird.

3. Gerät nach Anspruch 1 oder 2, bei dem die Einrichtung zum Festlegen von Zeichen einen auf dem Bildschirm angezeigten Bereichszeiger (P) umfaßt und das Zeichen durch diesen Bereichszeiger (P) gekennzeichnet wird.

4. Gerät nach Anspruch 3, bei dem dann, wenn auf dem Bildschirm durch den auf dem Bildschirm angezeigten Bereichszeiger (P) zwei vorbestimmte Punkte festgelegt werden, die genannten Mitteln zum Festlegen von Zeichen einen Rahmen anzeigen, der in diesen beiden Punkten Ecken aufweist.

5. Gerät nach einem der vorhergehenden Ansprüche, bei dem die Mittel zum Festlegen von Zeichen einen Joystick (10) umfassen.

## Revendications

1. Appareil à dessins animés pour produire des images animées sur l'écran d'une unité d'affichage (8), l'appareil comprenant:
- des moyens (3) pour fournir une pluralité de caractères sur l'écran de ladite unité d'affichage (8);
- des moyens (22, 23) pour désigner sélectivement un caractère désiré parmi ceux affichés sur l'écran de ladite unité d'affichage (8);
- des moyens (37) pour désigner des données de sens de défilement pour faire défiler le caractère désigné dans un sens prédéterminé; et
- des moyens (33) pour produire une commande d'exécution,
dans lequel, en réponse à la commande d'exécution issue desdits moyens générateurs de commande d'exécution (33), le caractère désigné est amené à défiler et affiché selon les données de sens de défilement obtenues desdits moyens de désignation de sens de défilement (37),
caractérisé en ce que:
- lesdits moyens pour fournir des caractères comprennent une pluralité de touches (20) avec des motifs de caractères représentés sur celles-ci pour amener les motifs de caractères respectifs sélectionnés à être affichés sur l'écran de ladite unité d'affichage (8), ce par quoi un caractère désiré peut être composé de dits motifs de caractères; et
- lesdits moyens pour désigner des caractères comprennent des moyens (10) actionnables par un utilisateur pour indiquer un caractère affiché sur l'écran de ladite unité d'affichage (8), et des moyens (33) actionnables par l'utilisateur pour confirmer que le caractère indiqué est le caractère désigné sélectivement.

2. Appareil selon la revendication 1, comprenant des moyens (34f, 34r) pour désigner un ordre de priorité entre une pluralité de caractères sur l'écran de l'unité d'affichage (8), dans lequel, lorsque les caractères affichés sont amenés à défiler pour être mutuellement superposés, un des ces caractères est affiché avec la priorité selon l'ordre de priorité désigne.

3. Appareil selon la revendication 1 ou la revendication 2, dans lequel lesdits moyens de désignation de caractères comprennent un pointeur d'étendue (P) affiché sur ledit écran, et le caractère est indiqué par ledit pointeur d'étendue (P).

4. Appareil selon la revendication 3, dans lequel, lorsque deux points prédéterminés sur l'écran sont désignés par ledit pointeur d'étendue (P) affiché sur l'écran, un cadre ayant des coins auxdits deux points est affiché par lesdits moyens de désignation.

5. Appareil selon l'une quelconque des revendications précédentes, dans lequel lesdits moyens de désignation de caractères comprennent une manette de jeux (10).
